# EUROPÄISCHE PATENTSCHRIFT

(11) **EP 4 543 609 B1**
(45) Veröffentlichungstag und Bekanntmachung des Hinweises auf die Patenterteilung: **27.05.2026**
(21) Anmeldenummer: 23735875.9
(22) Anmeldetag: 22.06.2023
(51) Int. Cl.: B22C 9/02, B22C 9/06, B22C 9/08, B22C 9/10, B22C 9/24, B22C 23/00, B22D 19/00, B33Y 80/00, B22D 15/02

(54) **GIESSFORM ZUR HERSTELLUNG EINES AUS EINER LEICHTMETALLLEGIERUNG GEBILDETEN GUSSTEILS**
CASTING MOULD FOR PRODUCING A CAST PART FORMED FROM A LIGHT-METAL ALLOY
MOULE POUR LA PRODUCTION D'UNE PIÈCE COULÉE CONSTITUÉE D'UN ALLIAGE LÉGER

(30) Priorität: 24.06.2022 LU 502349
(43) Veröffentlichungstag der Anmeldung: 30.04.2025
(73) Patentinhaber: Nemak, S.A.B. de C.V., 66017 García, Nuevo León (MX)
(72) Erfinder: SCHNUBEL, Dirk, 66123 Saarbrücken (DE); KLAUS, Gerald, Saarbrücken 66123 (DE); LINKE, Thomas Frederik, 66663 Merzig (DE)
(74) Vertreter: Cohausz & Florack
(86) Internationale Anmeldenummer: PCT/IB2023/056449
(87) Internationale Veröffentlichungsnummer: WO 2023/248170

(56) Entgegenhaltungen:
- EP-A1- 4 102 689
- WO-A1-2021/157242
- CN-A- 105 305 704
- DE-A1- 102018 221 826
- DE-B3- 102013 101 942
- US-A1- 2018 221 942
- "Innovativer 3-D-Druck in Giessereien", GIESSEREI,, vol. 101, no. 10, 7 October 2014 (2014-10-07), pages 74 - 77, XP001596227

## Beschreibung

Die Erfindung betrifft eine Gießform zur Herstellung eines aus einer Leichtmetalllegierung gebildeten Gussteils, insbesondere eines Gehäuses für einen elektrischen Antrieb für ein Kraftfahrzeug. Ferner betrifft die Erfindung ein Verfahren zur Herstellung eines aus einer Leichtmetalllegierung gebildeten Gussteils, insbesondere eines Gehäuses für einen elektrischen Antrieb für ein Kraftfahrzeug.

Gießformen, Sandkerne sowie Verfahren zur Herstellung von Leichtmetallgussteilen sind beispielsweise aus EP 3 600 718 B1, EP 3 810 357 B1, EP 2 945 760 B1, CN 105 305 704 A, DE 10 2013 101942 B3, DE 10 2018 221826 A1 und WO 2021/157242 A1 bekannt.

Aus dem Stand der Technik ist außerdem bekannt, dass Kühlkanäle, das heißt Kanäle in einem Gussteil, die zur Führung eines Kühlmediums, das Wasser, Öl und/oder ein Wasser aufweisendes Kühlfluid umfassen kann, in das Gussteil gebohrt werden. Derartige Kanäle sind verfahrensbedingt ausschließlich gerade ausgebildet, wodurch nachteilig keinerlei Gestaltungsfreiheit besteht.

Der Erfindung liegt die Aufgabe zugrunde, eine Gießform der eingangs genannten Art zu schaffen, durch die ein aus einer Leichtmetalllegierung gebildetes Gussteil herstellbar ist, in das bereits Kanäle eingebracht sind.

Ferner liegt der Erfindung die Aufgabe zugrunde, eine Gießform zur Herstellung eines Gussteils zu schaffen, bei dem eine große konstruktive Gestaltungsfreiheit besteht.

Der Gegenstand der Erfindung wird durch die unabhängigen Ansprüche definiert; die abhängigen Ansprüche beschreiben bevorzugte Ausführungsformen. 1

Erfindungsgemäß wird die Aufgabe dadurch gelöst, dass die Gießform mindestens einen Sandkern aufweist, der derart ausgebildet und in der Gießform angeordnet ist, dass der mindestens eine Sandkern zumindest abschnittsweise in einer Umfangsrichtung vollständig von einer Leichtmetallschmelze, mit der die Gießform zu Bildung des Gussteils befüllt wird, umgeben werden kann.

Wird der mindestens eine Sandkern abschnittsweise vollständig in Umfangsrichtung von der Leichtmetallschmelze umgeben, wird in dem Gussteil ein Kanal abgebildet, dessen Kanalwände durch Erstarrung der den mindestens einen Sandkern umgebenden Leichtmetallschmelze gebildet werden, während ein Hohlraum von dem mindestens einen Sandkern, der durch mechanische oder thermische Behandlung aus dem Gussteil entfernbar ist, abgebildet wird.

Der mindestens eine Sandkern kann länglich und/oder gebogen, beispielsweise mäanderförmig oder helixförmig, ausgebildet sein und mindestens zwei Endabschnitte aufweisen, die zur Abbildung einer Durchgangsöffnung, durch die Zugang zu dem Kanal in dem herzustellenden Gussteil besteht. Dazu können die Endabschnitte des Sandkerns mit der Gießform oder einem anderen Sandkern verbunden werden, beispielsweise durch eine Klemm-, Kleb- und/oder Steckverbindung.

Denkbar ist, dass zwei Verbindungsabschnitte vorgesehen sind, die keine Endabschnitte bilden.

Ein derart ausgebildeter Kanal in dem Gussteil kann bei Verwendung des Gussteils für einen elektrischen Antrieb als Kühlkanal vorgesehen sein, durch den ein Kühlfluid wie Öl, Wasser und/oder ein Wasser aufweisendes Kühlfluid hindurchgeführt wird.

Dadurch, dass eine erfindungsgemäße Gießform eine große konstruktive Gestaltungsfreiheit des Gussteils erlaubt, kann ein Verlauf des Kanals in dem Gussteil durch den abschnittsweise vollständig in Umfangsrichtung von der Leichtmetallschmelze umgebbaren Sandkern derart gestaltet werden, dass beispielsweise bei Verwendung des Gussteils für einen elektrischen Antrieb ein als Kühlkanal ausgebildeter Kanal an denjenigen Stellen vorbeigeführt wird, an denen eine besonders hohe thermische Belastung bei Verwendung des elektrischen Antriebs in einem Kraftfahrzeug auftritt. Dies ist beispielsweise im Bereich einer Statoraufnahme eines Elektromotors erforderlich.

Eine erfindungsgemäße Gießform kann als Dauerform, beispielsweise als Kokille, oder als Sandgussform ausgebildet sein.

Bei einer Dauerform wie einer Kokille sind Außenkonturen eines herzustellenden Gussteils abbildende äußere Gießformwände aus einem Metall gebildet, während Innenkonturen abbildende innere Gießformbereiche aus Sandkernen gebildet sind.

Eine Sandgussform ist eine Form, die bis auf Einsatzelemente wie Kühleisen vollständig aus Sand gebildet ist und einmalig zur Herstellung eines Gussteils verwendbar ist.

Vorzugsweise ist eine Sandgussform selbsttragend.

Eine erfindungsgemäße Gießform ist für alle Gießverfahren verwendbar, bei denen eine Sandgussform oder eine Kokille verwendet werden, beispielsweise dem sogenannten CPS-Verfahren (Core Package System) mit Rollover oder dem sogenannten Rotacastverfahren. Wird eine erfindungsgemäße Gießform als Dauerform zur Durchführung eines dynamischen Gießverfahrens, bei dem die Gießform während einer Formfüllung bewegt wird, verwendet, ist eine Bewegungsgeschwindigkeit während der Formfüllung einstellbar.

Eine Bewegungsgeschwindigkeit kann beispielsweise eine Verschwenkgeschwindigkeit sein, mit der eine Kippgießform bei einer Formfüllung um eine Schwenkachse gedreht wird. Vorteilhaft wird ein effizientes Gießverfahren geschaffen, bei dem eine besonders schnelle Formfüllung bei gleichzeitiger Vermeidung von Turbulenzen während der Formfüllung möglich ist.

Eine Verwendung der erfindungsgemäßen Gießform im Schwerkraftguss bzw. Niederdruckguss ist besonders bevorzugt.

Ein erfindungsgemäßes Verfahren zur Herstellung eines aus einer Leichtmetalllegierung gebildeten Gussteils ist dadurch gekennzeichnet, dass mindestens ein in einer Gießform angeordneter Sandkern von einer Leichtmetallschmelze, mit der die Gießform zu Bildung des Gussteils befüllt wird, zumindest abschnittsweise in einer Umfangsrichtung vollständig von der Leichtmetallschmelze umgeben wird. Es wird ein Gießverfahren geschaffen, mit dem beispielsweise gebogene, längliche Kanäle, die ihrerseits wiederum Verzweigungen aufweisen können, entkonturnah herstellbar sind.

Der mindestens eine Sandkern ist zumindest bereichsweise gebogen ausgebildet, wobei ein Verhältnis einer Länge des Sandkerns zu einer Sandkernquerschnittsgröße zwischen 5 und 60 beträgt, vorzugsweise zwischen 7,5 und 38, wobei eine Sandkernquerschnittsgröße zumindest 1,6 mm beträgt.

Dadurch, dass der Sandkern zumindest bereichsweise gebogen ist, ist vorteilhaft ein Gussteil mit einem Kanal herstellbar, dessen Kanalgeometrie mit einem aus dem Stand der Technik bekannten Bohrverfahren nicht herstellbar ist.

Die Länge des mindestens einen Sandkerns ist der Abstand eines ersten Endabschnitts des Sandkerns, an dem der Sandkern mit der Gießform oder mit einem anderen Sandkern verbunden ist, zu einem dem ersten Endabschnitt abgewandten zweiten Endabschnitt, mit dem der Sandkern mit der Gießform oder einem anderen Sandkern verbunden ist. Dies bedeutet, dass die Länge des Sandkerns einer Länge des Kanals, den der Sandkern abbildet, entspricht, wobei die Länge durch Bestimmung eins Abstands von einer Eintrittsöffnung zu einer Austrittsöffnung des Kanals entlang einer Profilmittellinie des Kanals ermittelt wird.

Eine Sandkernquerschnittsgröße ist bei Betrachtung eines Sandkernquerschnitts der Abstand von zwei Punkten des Sandkernquerschnitts, die am weitesten voneinander entfernt sind.

Weist der Sandkern eine kreisrunde Querschnittsfläche auf, entspricht die Sandkernquerschnittsgröße dem Durchmesser.

Weist der Sandkern eine ovale Querschnittsfläche auf, entspricht die Sandkernquerschnittsgröße dem größeren der beiden Durchmesser.

Die Sandkernquerschnittsgröße kann über dessen Länge gleichbleibend sein oder Abschnitte mit verschiedenen Sandkernquerschnittsgrößen aufweisen. Weist der Sandkern Bereiche mit verschiedenen Sandkernquerschnittsgrößen auf, ist zur Verhältnisbildung die kleinste Sandkernquerschnittsgröße heranzuziehen.

Denkbar ist, dass zur Verhältnisbildung eine über die Länge des Sandkerns gemittelte Sandkernquerschnittsgröße verwendet wird.

Ein Sandkernquerschnitt kann rund, kreisrund, oval, mehreckig oder trapezförmig sein. Vorzugsweise ist der Sandkernquerschnitt in dem Bereich, der den Kanal abbildet, rund, oval oder viereckig mit abgerundeten Ecken.

Die Erfinder haben festgestellt, dass ein Sandkern, der ein erfindungsgemäßes Verhältnis einer Länge zu einer Sandkernquerschnittsgröße bei einer Sandkernquerschnittsgröße von zumindest 1,6 mm aufweist, hinreichend stabil ist, um sich bei Kontakt mit einer flüssigen Leichtmetalllegierung nur geringfügig zu verformen. Vorteilhaft wird eine Gießform geschaffen, mit der Gussteile endkonturnah herstellbar sind. Außerdem weisen diese Gussteile einen Kanal mit einer Kanallänge und -form auf, der bisher nicht herstellbar war.

Durch eine Sandkernquerschnittsgröße von mindestens 1,6 mm wird eine besonders gute Querschnittstabilität bei Kontakt zur Schmelze erreicht.

Die Erfinder haben außerdem festgestellt, dass ein solcher Sandkern mit mehreren voneinander verschiedenen Gießverfahren verwendbar ist, beispielsweise zur Verwendung im sogenannten Kernpaketverfahren mit Rollover, im Kokillen- oder sogar im Druckguss.

Beträgt das Verhältnis der Sandkernlänge zur Sandkernquerschnittsgröße des Sandkerns zwischen 5 und 60, kann in einem Gussteil, welches mit einer erfindungsgemäßen Gießform hergestellt ist, ein Kühlkanal geschaffen werden, der eine besonders homogene Kühlung des Gussteils bei dessen bestimmungsgemäßer Verwendung, insbesondere als Gehäuse für einen elektrischen Antrieb, ermöglicht. Vorteilhaft kann Materialermüdung durch eine Temperaturwechselbeanspruchung erheblich reduziert werden.

Beträgt das Verhältnis der Sandkernlänge zur Sandkernquerschnittsgröße des Sandkerns zwischen 7,5 und 38, kann neben einer besonders homogenen Kühlung gleichzeitig eine sehr schnelle Kühlung erfolgen. Temperaturspitzen, die beispielsweise bei bestimmungsgemäßer Verwendung eines mit einer erfindungsgemäßen Gießform hergestellten Gussteils in einem elektrischen Antrieb auftreten, können besonders schnell abgebaut werden. Eine Überhitzung des elektrischen Antriebs kann vorteilhaft verhindert werden.

In einer Ausgestaltung der Erfindung ist der mindestens eine Sandkern länglich ausgebildet und weist vorzugsweise Stützelemente auf, durch die der Sandkern mit der Gießform oder einem anderen Sandkern verbunden ist, wobei in einer Sandkernlängsrichtung benachbarte Stützelemente zwischen 60 mm und 200 mm voneinander beanstandet sind, vorzugsweise zwischen 90 mm und 150 mm, besonders bevorzugt zwischen 99 mm und 121 mm.

Durch die Verwendung von Stützelementen, die beispielsweise aus Sand gebildet sein können, ist ein geometrisch besonders komplexer und langer Kanal in dem Gussteil herstellbar. Durch die Stützelemente wird sichergestellt, dass der mindestens eine Sandkern, der bei Formfüllung der Gießform unmittelbaren Kontakt zu einer Leichtmetallschmelze hat, seine Form nahezu beibehält und sich durch Hitzeeinwirkung nur geringfügig verformt. Dadurch ist vorteilhaft ein endkonturnahes Gussteil mit besonders geringen Fertigungstoleranzen herstellbar.

Ist der mindestens eine Sandkern beispielsweise bereichsweise mäanderförmig oder helixförmig ausgebildet, können die Stützelemente ein Zusammensacken der Sandkerne bei der Formfüllung verhindern.

Werden Stützelemente verwendet, wird in Kontaktbereichen, in denen die Stützelemente an den mindestens einen Sandkern anliegen, jeweils eine zusätzliche Durchgangsöffnung in einen in dem Gussteil abgebildeten Kanal ausgebildet, die durch einen Stopfen verschließbar ist. Vorteilhaft ist durch Verwendung von den mindestens einen Sandkern abstützenden Stützelementen sowie durch Verwendung von Verschlussstopfen ein besonders langer Kanal mit komplexer Geometrie oder gebogenem Verlauf in dem Gussteil herstellbar.

Die Stützelemente sind vorzugsweise einstückig an den mindestens einen Sandkern angeformt und aus Formsand gebildet.

Die Erfinder haben festgestellt, dass zwischen 60 mm und 200 mm voneinander beabstandete Stützelemente eine besonders gute Kernformstabilität bei einer Füllung einer erfindungsgemäßen Gießform bewirken, insbesondere bei Verwendung der Gießform im Schwerkraft- oder Niederdruckguss.

Bei einem druckbeaufschlagten Gießverfahren wie Druckguss (HPDC; high pressure die casting) bieten trotz einer hohen mechanischen Belastung der Sandkerne bei einer Formfüllung zwischen 99 mm und 121 mm voneinander beabstandete Stützelemente eine besonders gute Kernformstabilität.

In Niederdruckgussverfahren mit sogenanntem Rollover hat sich bewährt, wenn zwischen 90 mm und 150 mm voneinander beabstandete Stützelemente verwendet werden.

Insgesamt ist eine erfindungsgemäße Gießform vorteilhaft zur Verwendung mit einer Vielzahl verschiedener Gießverfahren geeignet.

In einer weiteren Ausgestaltung der Erfindung weist der mindestens eine Sandkern zumindest einen Verbindungsabschnitt auf, der zur Ausbildung einer formschlüssigen, kraftschlüssigen und/oder stoffschlüssigen Verbindung mit der Gießform oder einem anderen Sandkern eingerichtet sind, wobei im Bereich eines Übergangs von dem zumindest einen Verbindungsabschnitt zu der Gießform oder dem anderen Sandkern vorzugsweise Ausrichtungsschrägen und/oder Entlüftungskanäle vorgesehen sind.

Es versteht sich, dass der mindestens eine Verbindungsabschnitt als Stützelement ausgebildet sein oder als solches wirken kann.

Durch die Ausrichtungsschrägen wird eine besonders genaue Positionierung des mindestens einen Sandkerns möglich, während durch die Entlüftungskanäle sichergestellt wird, dass Luft oder sogenanntes Kerngas aus dem abschnittsweise vollständig von einer Leichtmetall umgebenen mindestens einen Sandkern entweichen kann. Vorteilhaft ist eine endkonturnahe Herstellung eines Gussteils bei gleichzeitig fehlerfreier Gussteilqualität möglich.

Die Größe der Entlüftungskanäle beträgt zwischen 0,05 und 1,5 mm.

Denkbar ist, dass der mindestens eine Sandkern mehrere Verbindungsabschnitte aufweist, die zur Ausbildung einer formschlüssigen, kraftschlüssigen und/oder stoffschlüssigen Verbindung mit der Gießform oder einem anderen Sandkern eingerichtet sind, wobei im Bereich eines Übergangs der Verbindungsabschnitte zu der Gießform oder dem anderen Sandkern vorzugsweise Ausrichtungsschrägen und/oder Entlüftungskanäle vorgesehen sind.

Insbesondere kann der mindestens eine Sandkern zwei Verbindungsabschnitte aufweisen, die an zwei Enden des mindestens einen Sandkerns, der länglich ausgebildet sein kann, angeordnet sind. Dadurch kann in einem mit der erfindungsgemäßen Gießform hergestelltem Gussteil beispielsweise ein Kanal mit einer Eintrittsöffnung und einer Austrittsöffnung für ein Medium wie eine Kühlflüssigkeit geschaffen werden.

Weist der Sandkern genau einen Verbindungsabschnitt auf, kann ein sacklochartiger Kanal in einem mit der erfindungsgemäßen Gießform hergestelltem Gussteil geschaffen werden.

Zweckmäßigerweise ist der mindestens eine Sandkern 3D-gedruckt und weist vorzugsweise zumindest einen Hohlraum auf oder umfasst Bereiche, in die kein Bindemittel eingebracht ist. Ein Bindemittel ist in der Art eines Klebstoffs ausgebildet und bewirkt, dass eine Vielzahl von Sandkörnern zur Bildung des mindestens einen Sandkerns aneinander haften. Durch 3D-Druck, bei dem ein Sandkern schichtweise hergestellt wird, sind Sandkerne mit komplexer Geometrie wie Hinterschneidungen herstellbar, die nicht mit Kernschießmaschinen herstellbar sind. Geschossene Sandkerne erfordern außerdem zu deren Entformung aus einem Werkzeug einer Kernschießmaschine eine Entformungsschräge. Sandkerne mit zueinander senkrechten Wänden sind daher insbesondere durch 3D-Druck herstellbar.

Außerdem sind Sandkerne durch 3D-Druck herstellbar, die keine Entformungsschräge aufweisen, das heißt entformungsschrägenfrei sein.

Üblicherweise sind die Binderanteile in einem 3D-gedruckten Kern um ein Vielfaches höher als bei einem geschossenen Kern.

Dadurch, dass sich ein Bindemittel in einem Sandkern bei Kontakt mit einer Leichtmetallschmelze unter Bildung von sogenanntem Kerngas zersetzt, sind bindemittelfreie Bereiche oder zumindest ein Hohlraum erforderlich, in die bzw. in den das Kerngas hineinströmen kann. Vorteilhaft wird sichergestellt, dass Fehlstellen in dem herzustellenden Gussteil, die durch Kerngas verursacht werden, gar nicht erst gebildet werden.

Bei einem 3D-gedruckten Kern mit zumindest einem Hohlraum ist denkbar, dass dieser Hohlraum zu einer Seite hin offen ist und eine Öffnung von einem benachbarten Sandkern der Gießform abgedeckt ist.

Außerdem ist denkbar, dass der zumindest eine Hohlraum durch einen Entlüftungskanal entlüftet werden kann, das heißt, dass im Innern der Gießform gebildetes Kerngas durch den Hohlraum nach außerhalb der Gießform geführt werden kann.

Es versteht sich, dass eine Absaugvorrichtung vorgesehen sein kann, durch die das Kerngas aus der Gießform herausgesaugt wird.

In einer Ausgestaltung der Erfindung umfasst die Gießform einen weiteren Sandkern, der 3D-gedruckt ist und einen Raum aufweist, der zur Aufnahme eines Kühlelements eingerichtet ist. Durch Verwendung eines aus einem Metall gebildeten Kühlelementes, eines sogenannten Kühleisens, kann im Bereich des Kühlelements die Erstarrung einer Leichtmetallschmelze vorteilhaft beeinflusst werden, das heißt im Bereich um das Kühlelement wird ein feinkörniges Gussgefüge ausgebildet, das besonders gute mechanische Eigenschaften aufweist. Außerdem wird insbesondere bei Aluminiumbasisschmelzen verhindert, dass im Bereich des Kühlelements eine durch Ausgasen von Wasserstoff gebildete Porosität in einem herzustellenden Gussteil entsteht. Diese sogenannte Wasserstoffporosität bewirkt insbesondere bei dünnwandigen Kanälen eine Undichtigkeit beim Hindurchführen eines flüssigen Mediums, beispielsweise einer Kühlflüssigkeit.

Bei Verwendung einer erfindungsgemäßen Gießform sind Abkühlraten zwischen 10 und 15 Kelvin pro Sekunde in einem Bereich, der sich in dem herzustellenden Gussteil in einem Abstand zwischen 3 und 5 mm zu dem Kühlelement befindet, möglich, wodurch die vorgenannten Eigenschaften erreichbar sind.

Die Erfinder haben erkannt, dass eine Abkühlrate im vorgenannten Bereich zwischen 10 und 15 Kelvin pro Sekunde und der vorgenannte Abstand von dem Kühlelement ausreichend große sind, um die erforderlichen Gussteileigenschaften zu erreichen. Ferner wurde erkannt, dass eine höhere Abkühlrate nicht erforderlich, sondern eher hinderlich ist, da dies zur Lunkerbildung führen kann.

In einer weiteren Ausgestaltung der Erfindung umfasst die Gießform einen zusätzlichen Sandkern und/oder ein Dauerformeinsatzelement, wobei der zusätzliche Sandkern als Elektromotorkern und das Dauerformeinsatzelement als Elektromotordauerformeinsatzelement ausgebildet ist, und zur Abbildung eines Aufnahmeraums in dem Gussteil, in den ein Stator und ein Rotor eines Elektromotors eingebracht werden können, vorgesehen ist.

Ein Dauerformeinsatzelement ist ein mehrfach verwendbares Einsatzelement, welches nach Herstellung eines Gussteils erneut zur Herstellung eines weiteren Gussteils in eine Gießform einsetzbar ist. Ein solches Dauerformeinsatzelement kann beispielsweise im Kokillenguss oder einem anderen Gießverfahren, bei dem Dauerformen verwendet werden, benutzt werden.

Der Elektromotorkern oder das Elektromotordauerformeinsatzelement, der bzw. das insbesondere rotationssymmetrisch ausgebildet sein kann, kann beispielsweise liegend in der Gießform angeordnet sein, so dass beispielsweise bei einem Schwerkraftgießverfahren eine Metallschmelze nicht in Längsrichtung an diesem aufsteigt, sondern den Elektromotorkern oder den Elektromotordauerformeinsatzelement in Umfangsrichtung aufsteigend umströmt. Die Erfinder haben festgestellt, dass ein Aufsteigen der Schmelze an dem Elektromotorkern oder dem Elektromotordauerformeinsatzelement in Längsrichtung nicht erforderlich ist, um eine porenfreie, einen Aufnahmeraum mit darin eingebrachten Kühlkanälen begrenzende Wandung in dem Gussteil zu erhalten.

Die erfindungsgemäße Gießform ist zur Herstellung eines Gehäuses für einen elektrischen Antrieb für ein Kraftfahrzeug geeignet, dessen Elektromotor entweder als Innenläufer oder als Außenläufer ausgebildet ist.

Zweckmäßigerweise ist der Elektromotorkern mehrteilig ausgebildet, wobei jeder Elektromotorkernteil eine Entformungsschräge aufweist, die sich in einer Längsrichtung des Elektromotorkerns umlaufend über eine Mantelfläche des Elektromotorkerns erstreckt, und/oder das Elektromotordauerformeinsatzelement weist eine Entformungsschräge auf, die sich in einer Längsrichtung des Elektromotordauerformeinsatzelements umlaufend über eine Mantelfläche erstreckt.

Eine Entformungsschräge ist bei einen geschossenen Sandkern erforderlich, damit eine Entnahme aus einem üblicherweise zweiteiligen Kernschießwerkzeug möglich ist. Je nach Kernkomplexität beträgt eine Entformungsschräge bei einem geschossenen Sandkern zwischen 0,5 und 2 Grad.

Vorzugsweise ist der Elektromotorkern zweiteilig und rotationssymmetrisch ausgebildet, beispielsweise kegelstumpfförmig oder zylinderförmig, wobei jeder Elektromotorkernteil rotationssymmetrisch ist.

Ist der Elektromotorkern zweiteilig ausgebildet, können die beiden Elektromotorkernteile in Kernlängsrichtung hintereinander angeordnet sein und in einer Kontaktebene unter Bildung eines bündigen Übergangs zur Bildung des Elektromotorkerns aneinander anliegen. Jeder der beiden Elektromotorkernteile kann in Längsrichtung des Elektromotorkerns gleich groß sein. Denkbar ist, dass die beiden Elektromotorkernteile verschieden groß sind, insbesondere in Längsrichtung des Elektromotorkerns.

Jede der Entformungsschrägen der Elektromotorkernteile kann entweder von einem äußeren Ende des Elektromotorkernteils zur Kontaktebene hin abfallen oder ansteigen.

Es wird ein Elektromotorkern geschaffen, der zwei Entformungsschrägen aufweist, die sich beispielsweise jeweils über eine Hälfte des gesamten Elektromotorkerns erstrecken. Vorteilhaft ist eine Abbildung der Entformungsschräge in dem mit der erfindungsgemäßen Gießform hergestellten Gussteil, die eine Abweichung des Aufnahmeraumes für den Stator und den Rotor von einer Zylinderform bewirkt, nur halb so groß wie sie bei einem einteiligen Kern wäre. Dadurch wird ein Aufwand für eine mechanische Bearbeitung, durch die ein zylinderförmiger Aufnahmeraum für den Stator und den Rotor geschaffen wird, erheblich reduziert. Selbiges gilt analog für das Elektromotordauerformeinsatzelement, welches jedoch einstückig oder wie der Elektromotorkern mehrteilig ausgebildet sein kann.

Durch die Verwendung einer erfindungsgemäßen Gießform mit einem solchen Elektromotorkern oder einem Elektromotordauerformeinsatzelement wird eine endkonturnahe Fertigung eines Gussteils möglich.

Es versteht sich, dass eine weitere Reduktion des Bearbeitungsaufwandes durch einen drei-, vier- oder fünfteiligen Elektromotorkern oder ein solches Elektromotordauerformeinsatzelementmöglich ist.

Denkbar ist, dass ein Mantelflächenabschnitt des Elektromotorkerns oder des Elektromotordauerformeinsatzelements von mindestens einem Kühlelement gebildet ist.

In einer Ausgestaltung der Erfindung ist die Gießform derart ausgebildet, dass eine Normale auf eine Schmelzefront einer Leichtmetallschmelze, mit der die Gießform entgegen einer Wirkrichtung der Schwerkraft, befüllt wird, schräg zu einer Normalen auf einen Bereich der Gießform, in dem die Leichtmetallschmelze in Kontakt mit der Gießform kommt, angeordnet ist. Eine Schmelzefront kann im Schwerkraftguss oder Niederdruckguss bei Verwendung einer erfindungsgemäßen Gießform, die als Dauerform wie eine Kokille oder als Sandgussform ausgebildet sein kann, entgegen einer Wirkungsrichtung der Schwerkraft in der Gießform aufsteigen, das heißt die Normale auf die Schmelzefront ist parallel und entgegen der Wirkungsrichtung der Schwerkraft angeordnet.

Bei Formfüllung der Gießform mit einer Schmelze wird Formluft von der Schmelze verdrängt und ein das herzustellende Gussteil abbildender Formhohlraum wird mit der Schmelze befüllt.

Dadurch, dass die Normale auf die Schmelzefront schräg zu einer Normalen auf einen Bereich der Gießform ist, in dem die Schmelze in Kontakt mit der Gießform kommt, wird vorteilhaft eine sich mit einer Richtungskomponente entgegen einer Wirkungsrichtung der Schwerkraft erstreckende Schräge ausgebildet, entlang der die aus der Gießform zu evakuierende Formluft abgeleitet werden kann. Fehlstellen in dem herzustellenden Gussteil aufgrund von Formlufteinschlüssen werden vorteilhaft verhindert.

Es versteht sich, dass sich die Orientierung der beiden Normalen, die auf die Schmelzefront bzw. die auf einen Bereich der Gießform, zueinander verändern lässt, in dem eine Ausrichtung der Gießform bei einer Formfüllung im Gravitationsfeld der Erde verändert wird. Dies ist nicht ausschließlich, jedoch insbesondere für eine Auslegung eines sogenannten Rotacast-Prozesses erforderlich.

Eine derartige Ausbildung der Gießform ist insbesondere in denjenigen Gießformbereichen relevant, in denen Verstärkungs- oder Kühlrippen in dem herzustellenden Gussteils vorgesehen sind, das heißt längliche und schmale Vertiefungen, oder zylinderförmige Vorsprünge, die zur Aufnahme von Schrauben zur Anbringung von Anbauteilen an ein Bauteil, das aus dem Gussteil hergestellt wird, vorgesehen sind.

In einer weiteren Ausgestaltung der Erfindung weist die Gießform ein Einsatzelement auf, das zur Beeinflussung von Strömungseigenschaften einer in die Gießform einströmenden Leichtmetallschmelze eingerichtet ist, wobei das Einsatzelement insbesondere als Gießfilter oder als Gießfilterkaskade ausgebildet ist. Der Gießfilter kann schwammartig und aus einer Keramik gebildet sein. Der Gießfilter kann eine Porosität zwischen 10 und 60 ppi (pores per inch) aufweisen, vorzugsweise zwischen 25 und 55 ppi, besonders bevorzugt zwischen 40 ppi und 50 ppi.

Durch Verwendung eines Gießfilters oder einer Gießfilterkaskade kann bei einer Formfüllung der Gießform eine Homogenisierung eines Leichtmetallschmelzeflusses erreicht werden, das heißt Verwirbelungen, die zu Gießfehlern wie Oxideinschlüssen führen können, werden vorteilhaft verhindert.

In einer Ausgestaltung der Erfindung weist die Gießform ein Einsatzelement auf, das zum Verbleib in einem mit der Gießform hergestellten Gussteil vorgesehen ist und vorzugsweise als Bauteil des elektrischen Antriebs, für den das Gussteil verwendbar ist, ausgebildet ist. Ein solches Bauteil kann beispielsweise eine Heizspirale sein, die in eine Wand des Gussteils eingegossen wird und bei Verwendung des Gussteils in einem elektrischen Fahrzeug zum Vorwärmen nutzbar ist. Ein solches Bauteil kann außerdem ein Verstärkungselement sein, beispielsweise für einen Sandkern oder einen Lagersitz, das eine hohe mechanische Stabilität und/oder ein erheblich besseres tribologisches Verhalten ermöglicht.

Denkbar ist, dass Einsatzelemente als Sensoren ausgebildet sind.

Zweckmäßigerweise weist die Gießform ein aus einem anderen Material als Formsand gebildetes Einsatzelement auf, das zur Entfernung aus einem mit der Gießform hergestellten Gussteil vorgesehen ist. Ein solches Einsatzelement kann beispielsweise zur Abbildung eines Kanals mit einem besonders kleinen Querschnitt von weniger als 6 mm, vorzugsweise zwischen 1 und 4 mm, vorgesehen sein.

Damit das Einsatzelement vollständig aus dem Gussteil entfernbar ist, kann es hohl ausgebildet sein.

In einer Ausgestaltung der Erfindung weist die Gießform einen Bereich mit mehreren weiteren Sandkernen auf, wobei die weiteren Sandkerne bei Verwendung des Gussteils für einen elektrischen Antrieb eines Kraftfahrzeugs zur Abbildung eines Aufnahmegehäuses für Leistungselektronikkomponenten und/oder Getriebekomponenten des elektrischen Antriebs vorgesehen sind.

Bei einem elektrischen Antrieb sind Leistungselektronikkomponenten beispielsweise Stromwandler oder Inverter. Vorteilhaft wird eine Gießform geschaffen, durch die beispielsweise ein Gehäuse für einen elektrischen Antrieb herstellbar ist, an das weitere Bauteilaufnahmeräume einstückig angeformt sind. Vorteilhaft ist ein Montageschritt, bei dem ein solcher Bauteilaufnahmeraum an das Gehäuse angebracht wird, nicht erforderlich.

Die Erfinder haben das technische Vorurteil überkommen, wonach einzelne Komponenten eines elektrischen Antriebs an ein Gehäuse angeflanscht werden müssen und festgestellt, dass deren Einbringung in einen einstückig an das Gehäuse angeformten Bauteilaufnahmeraum vorteilhaft ist.

In einer weiteren Ausgestaltung der Erfindung weist die Gießform einen Bereich mit mehreren zusätzlichen Sandkernen auf, wobei die mehreren zusätzlichen Sandkerne bei Verwendung des Gussteils in einem Elektromotor eines Kraftfahrzeugs zur Abbildung von Kühlkanälen vorgesehen sind, die geregelt mit einem Kühlfluid durchströmbar sind. Ein solcher Bereich kann zur Abbildung eines Thermal Management Systems, zur Steuerung des Kälte- bzw. Wärmehaushalts, in das Gehäuse eines Elektromotors als Teil des Gussbauteils integriert werden. Das System erlaubt es, z.B. auch in Verbindung mit einer Wärmepumpe, entstehende Abwärme von Elektromotor und Leistungselektronik dort nutzbar zu machen, wo ein Bedarf besteht, um beispielsweise das Kraftfahrzeug zu beheizen oder um eine Antriebsbatterie vor- oder aufzuwärmen. Durch Einbringung von Kühlkanälen in ein Gussteil, die durch eine Regelungseinrichtung geregelt von einem Kühlfluid durchströmbar sind, ist deren Verlegung bei einer Motormontage vorteilhaft nicht erforderlich. Mögliche Fehlstellen werden verhindert, ein Motormontageaufwand erheblich reduziert und Leitungslänge sowie damit einhergehend Gewicht verringert.

In einer Ausgestaltung der Erfindung ist in wenigstens ein Seitenteil der Gießform ein Hohlraum eingebracht ist, der einen zusätzlichen Speiser abbildet, wobei der Hohlraum durch Durchgangskanäle mit einem das Gussteil abbildenden Formhohlraum fluidisch verbunden ist. Üblicherweise befindet sich der Speiser im sogenannten Schwerkraftguss zur Erstarrung einer Leichtmetallschmelze, mit der eine Gießform befüllt wurde, oberhalb des Gussteils und dessen Speiserhälse sind lediglich an einer Oberseite des Gussteils an dieses angebunden. Zwar ist eine Speisung des gesamten Gussteils dadurch möglich, jedoch können großvolumige Gussteilbereiche, die beispielsweise durch dünne Wände, die zwischen 1 und 4 mm dick sind, und die durch diese Wände mit dem Speiser fluidisch verbunden sind, nicht hinreichend gespeist werden, so dass diese Gussteilbereiche besonders anfällig für Lunkerbildung sind. Durch eine Anbindung eines zusätzlichen Speisers an eine Seite des Gussteils sind insbesondere Gussteile mit großen Abmessungen und bereichsweise geringen Wandstärken defektfrei, insbesondere lunkerfrei, herstellbar. Es versteht sich, dass der zusätzliche Speiser an den oberhalb des Gussteils angeordneten Speiser, der als Hauptspeiser wirkt, fluidisch angebunden ist, das heißt ein den Hauptspeiser abbildender Hohlraum in der Gießform und ein den zusätzlichen Speiser abbildender Hohlraum durch Durchgangskanäle miteinander verbunden sind.

Insbesondere im Bereich eines Aufnahmeraums für einen Stator und einen Rotor des elektrischen Antriebs kann ein Gussteilbereich unterhalb einer dünnen Wand, die darin eingebrachte Kühlkanäle begrenzen kann, gespeist werden. Zum Ausschuss des Gussteils führende Lunker entstehen nicht.

Zweckmäßigerweise weist die Gießform ein Entlüftungsmittel auf, das einen Entlüftungskanal begrenzt und einen inneren Gießformwandabschnitt, bildet. Der innere Gießformwandabschnitt begrenzt einen Hohlraum, der bei einer Formfüllung mit einer Schmelze zur Bildung eines Gussteils gefüllt wird.

Ein Entlüftungsmittel kann insbesondere bei Dauerformen vorteilhaft sein. Das Entlüftungsmittel kann Entlüftungsdüsen umfassen, die insbesondere an einem einem Gießformhohlraum zugewandten Ende eines Entlüftungskanals angeordnet sind. Die Entlüftungsdüsen können beispielsweise Entlüftungsschlitze aufweisen.

Beispielsweise können besonders große Entlüftungskanäle geschaffen werden, die selbst bei schneller Formfüllung eine hinreichende Gießformentlüftung ermöglichen und keine Abweichung von einer abzubildenden Gussteilgeometrie erfordern, da das Entlüftungsmittel einen Formwandabschnitt bildet.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Eine erste Ausführungsform einer erfindungsgemäßen Gießform zur Herstellung eines Gehäuses für einen elektrischen Antrieb für ein Kraftfahrzeug,
- Fig. 2: eine weitere Ausführungsform einer erfindungsgemäßen Gießform zur Herstellung eines Gehäuses für einen elektrischen Antrieb für ein Kraftfahrzeug,
- Fig. 3: ein Detail einer Ausführungsform einer erfindungsgemäßen Gießform zur Herstellung eines Gehäuses für einen elektrischen Antrieb für ein Kraftfahrzeug,
- Fig. 4: eine weitere Ausführungsform einer erfindungsgemäßen Gießform zur Herstellung eines Gehäuses für einen elektrischen Antrieb für ein Kraftfahrzeug,
- Fig. 5: eine Ausführungsform einer erfindungsgemäßen Gießform zur Herstellung eines Gehäuses für einen elektrischen Antrieb für ein Kraftfahrzeug,
- Fig. 6: eine besondere Ausführungsform einer erfindungsgemäßen Gießform zur Herstellung eines Gehäuses für einen elektrischen Antrieb für ein Kraftfahrzeug.

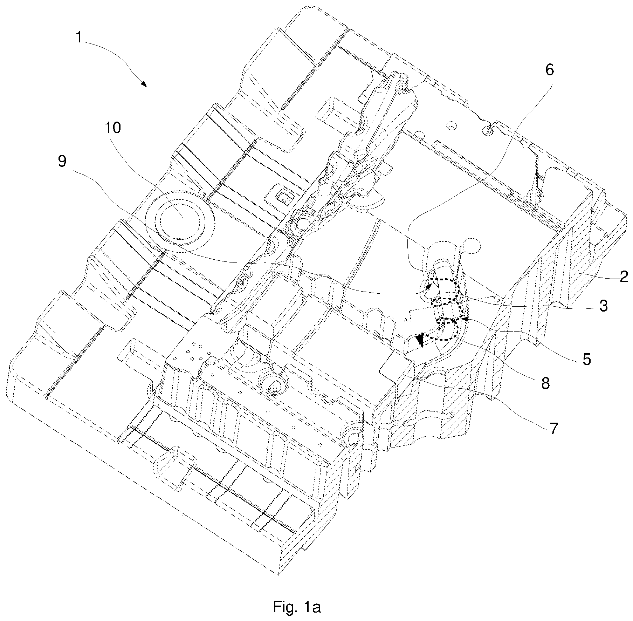

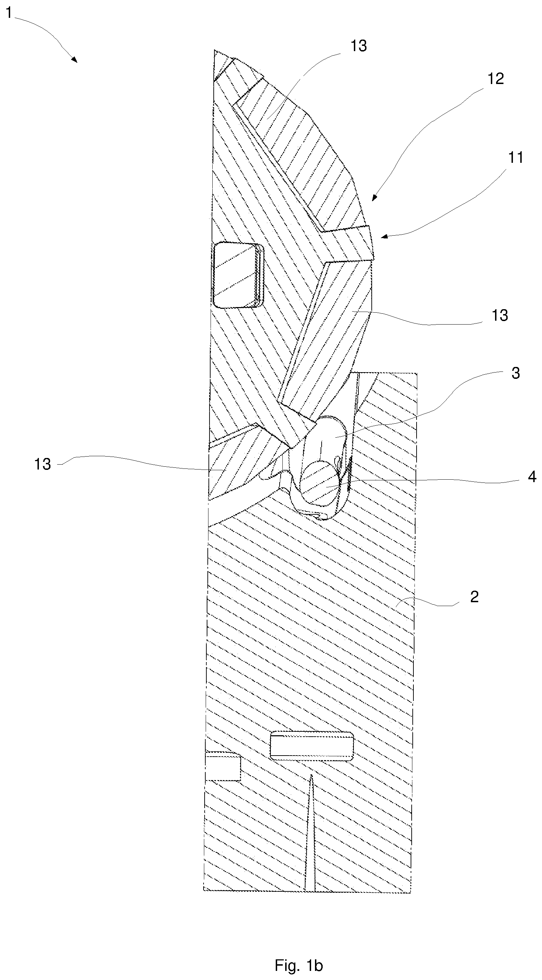

Eine in Fig. 1a in einer perspektivischen Draufsicht und in Fig. 1b im Querschnitt entlang eines Schnitts A-A aus Fig. 1a ausschnittsweise gezeigte Sandgussform 1 mit einem Basissandkern 2 umfasst einen gebogenen Sandkern 3 mit einer ovalen Querschnittsfläche 4. Der Sandkern 3 ist in diesem Ausführungsbeispiel derart in der Sandgussform 1 angeordnet, dass ein einen Kanal abbildender Abschnitt 5, der zwischen zwei Verbindungsabschnitten 6, 7 angeordnet ist, vollständig von einer Leichtmetallschmelze, mit der die Sandgussform 1 zur Herstellung eines Gussteils befüllbar ist, umgeben werden kann (gestrichelter helixförmiger Pfeil 8). Jeder der Verbindungsendabschnitte 6, 7 ist durch eine Steckverbindung mit der Sandgussform 1 verbunden, wobei beispielsweise an einem Übergang 9 des Verbindungsendabschnitts 6 zu dem Basissandkern 2 eine Kanaleintrittsöffnung in dem Gussteil ausgebildet werden kann.

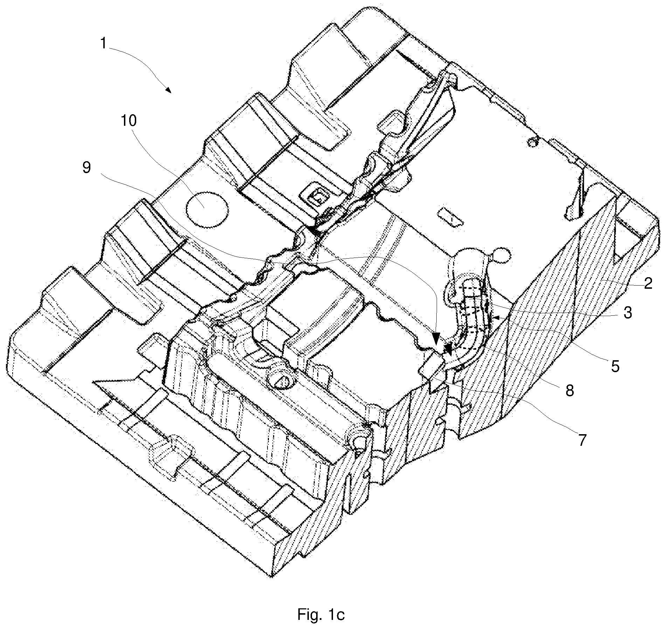

Der Basissandkern 2 weist ferner einen Einfüllkanal 10 auf, durch die eine Leichtmetallschmelze in die Sandgussform 1 einströmen kann. Denkbar ist, dass ein in Fig. 1 nicht gezeigter Gießfilter in dem Einfüllkanal 10 oder im Bereich des Einfüllkanals 10 angeordnet ist.

Der in einem Gussteil herzustellende Kanal wird in diesem Ausführungsbeispiel durch den gebogenen Sandkern 3 abgebildet, wobei ein Kanalwände abbildender Hohlraum insbesondere von einem in Fig. 1b ausschnittsweise im Querschnitt gezeigten, in Fig. 1a aus Gründen der Übersichtlichkeit weggelassenen Elektromotorkern 11 begrenzt ist. Der Elektromotorkern 11 ist im Wesentlichen zylinderförmig ausgebildet, wobei Mantelflächenabschnitte 12 von aus Gusseisen gebildeten Kühlelementen 13 gebildet werden. Durch den Elektromotorkern 11 wird in dem Gussteil ein Aufnahmeraum abgebildet, in dem insbesondere ein Stator und ein Rotor eines elektrischen Antriebs angeordnet werden können.

Ein in Fig. 1c in einer perspektivischen Draufsicht gezeigter Sandkern 3 unterscheidet sich von demjenigen in Fig. 1a und 1b gezeigten dadurch, dass der Sandkern 3 einen einzigen Verbindungsabschnitt 7 aufweist und ein in Fig. 1c nicht mit einem Bezugszeichen versehenes freies Ende.

Durch den in Fig. 1c gezeigten Sandkern 3 kann ein sacklochartiger Kanal in ein Gussteil eingebracht werden, das mit der Gießform 1 hergestellt wird.

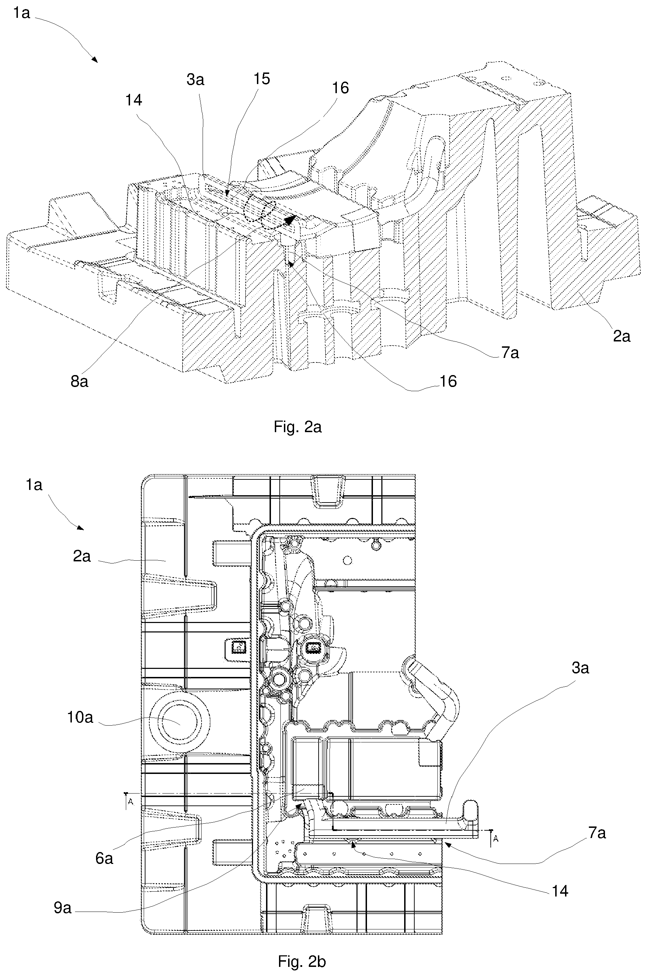

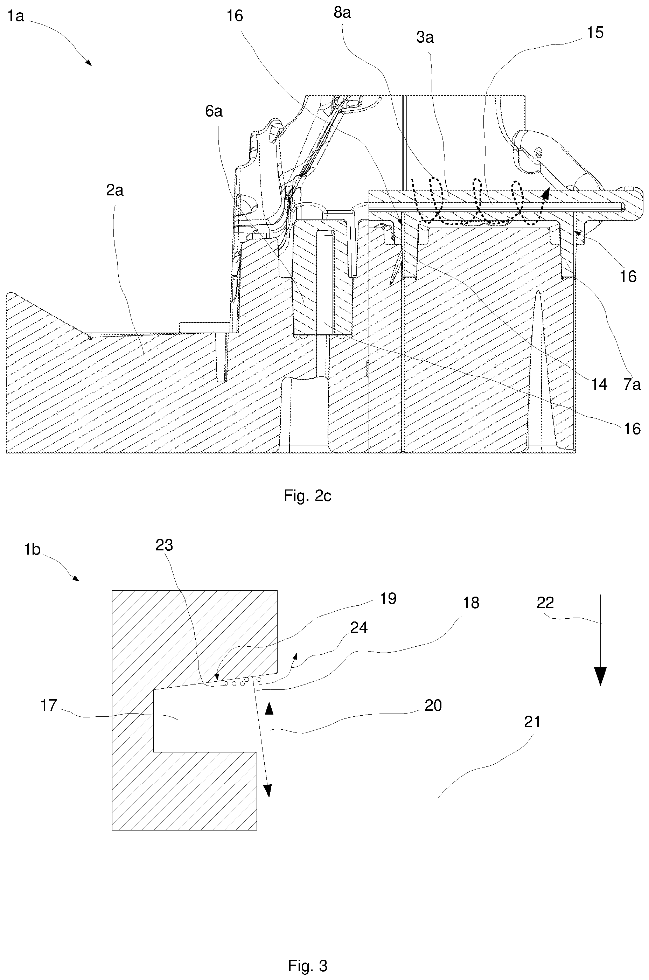

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Eine in Fig. 2a in einer perspektivischen Ansicht, in Fig. 2b in einer Draufsicht und in Fig. 2c in einer geschnittenen Seitenansicht entlang des Schnitts A-A aus Fig. 2b ausschnittsweise gezeigte Sandgussform 1a unterscheidet sich von derjenigen in Fig. 1 gezeigten dadurch, dass ein in Draufsicht hufeisenförmiger Sandkern 3a ein zusätzliches Stützelement 14 aufweist, welches zwischen zwei Verbindungsabschnitten 6a, 7a angeordnet ist. Das Stützelement 14 ist aus Formsand gebildet und einstückig an den Sandkern 3a angeformt.

Der in Draufsicht hufeisenförmige Sandkern 3a ist in diesem Ausführungsbeispiel 3D-gedruckt und weist einen Hohlraum 15 sowie Entlüftungskanäle 16 auf, durch die sogenanntes Kerngas aus dem Sandkern 3a bei Füllung der Sandgussform mit einer Leichtmetallschmelze aus der Sandgussform 1a herausgeführt werden kann. Dies kann insbesondere bei solchen Sandkernen vorteilhaft sein, die einen hohen Binderanteil aufweisen und die bei Füllung eines Formhohlraums mit einer Leichtmetallschmelze abschnittsweise vollständig von der Leichtmetallschmelze umgeben werden.

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Ein Ausschnitt einer in im Querschnitt schematisch gezeigten Sandgussform 1b umfasst eine tiefe, schmale Ausnehmung 17 in einem Seitenteil der Sandgussform 1b, die zur Abbildung einer Verstärkungsrippe eines mit der Sandgussform herstellbaren Gussteils eingerichtet ist. Eine Normale 18 auf einen oberen Sandgussformwandabschnitt 19 im Bereich der Ausnehmung 17 ist schräg angeordnet zu einer Normalen 20 auf eine Schmelzefront 21 einer Leichtmetallschmelze, die für eine Formfüllung der Sandgussform in diesem Ausführungsbeispiel entgegen einer Wirkrichtung 22 der Schwerkraft in der Sandgussform 1b aufsteigt.

Der Sandgussformwandabschnitt 19 bildet eine schiefen Ebene aus, entlang der von der Schmelzefront 21 beim Aufsteigen in der Sandgussform 1b verdrängte Formluft 23 entlang eines Pfeils 24 gleiten kann. Vorteilhaft wird keine Formluft in der Ausnehmung eingeschlossen, ein zum Ausschuss des Gussteils führender Gießfehler vorteilhaft verhindert.

Denkbar ist, dass durch den Sandgussformwandabschnitt ein Entlüftungskanal hindurchgeführt ist, um Formluft direkt aus der Sandgussform 1b hinauszuführen.

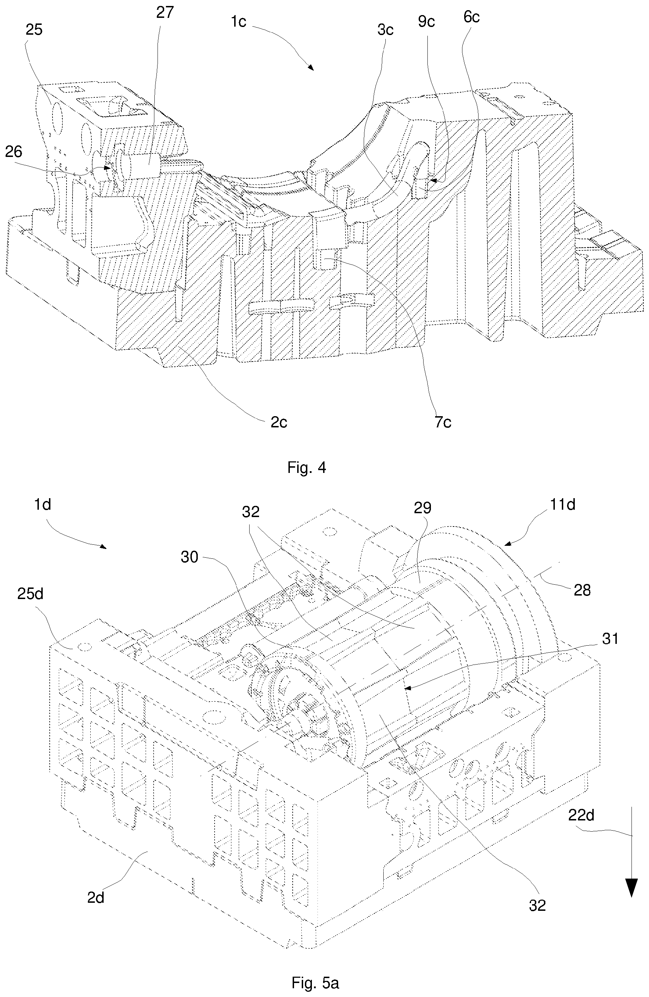

Es wird nun auf Fig. 4 Bezug genommen, wo gleiche oder gleichwirkende Teile mit derselben Bezugszahl wie in Fig. 1 bis 3 bezeichnet sind und der betreffenden Bezugszahl jeweils der Buchstabe c beigefügt ist.

Bei einer in Fig. 4 in einer perspektivischen Ansicht ausschnittsweise gezeigten Sandgussform 1c ist ein Seitenwandkern 25 3D-gedruckt und weist einen Durchgangskanal 26 auf, in den ein aus Gusseisen gebildetes Kühlelement 27 eingebracht ist. Dadurch, dass der Seitenwandkern 25 3D-gedruckt ist, ist der Durchgangskanal derart ausbildbar, dass das Kühlelement 27 von außerhalb der Sandgussform 1c in den Seitenwandkern 25 eingebracht und kraftschlüssig gehalten werden kann.

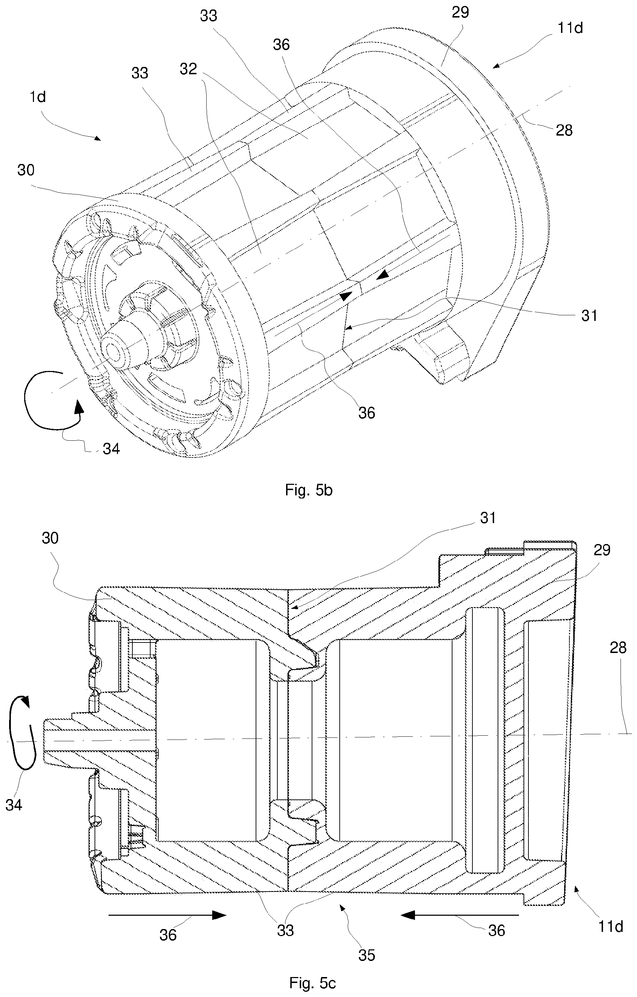

Es wird nun auf Fig. 5 Bezug genommen, wo gleiche oder gleichwirkende Teile mit derselben Bezugszahl wie in Fig. 1 bis 4 bezeichnet sind und der betreffenden Bezugszahl jeweils der Buchstabe d beigefügt ist.

Bei einer in Fig. 5a in einer perspektivischen Draufsicht ausschnittsweise gezeigten Sandgussform 1d ist ein zweiteiliger Elektromotorkern 11d liegend in der Sandgussform 1d angeordnet, wobei liegend bedeutet, dass eine die Sandgussform 1d befüllende Leichtmetallschmelze den im Wesentlichen zylindrischen Elektromotorkern 11d in Umfangsrichtung beispielsweise entgegen einer Wirkrichtung 22d der Schwerkraft umströmt und nicht in Längsrichtung entlang einer Zylinderachse 28.

Zwei Elektromotorkernteile 29, 30, die durch eine Steckverbindung miteinander verbunden sind und in einer Kontaktebene 31 aneinander anliegen, bilden den Elektromotorkern 11d und umfassen in einer in Fig. 5b gezeigten perspektivischen Detailansicht auf den Elektromotorkern 11d Ausnehmungen 32, die zur Aufnahme von in Fig. 1b mit Bezugszeichen 13 bezeichneten Kühlelementen vorgesehen sind.

Obwohl denkbar ist, dass der Elektromotorkern 3D-gedruckt ist, ist er in diesem Ausführungsbeispiel als geschossener Sandkern ausgebildet.

Jeder Elektromotorkernteil 29, 30 weist eine Entformungsschräge 33 auf, die sich in Umfangsrichtung 34 umlaufend über eine Mantelfläche 35 erstreckt und in Richtung eines Pfeils 36 abfällt.

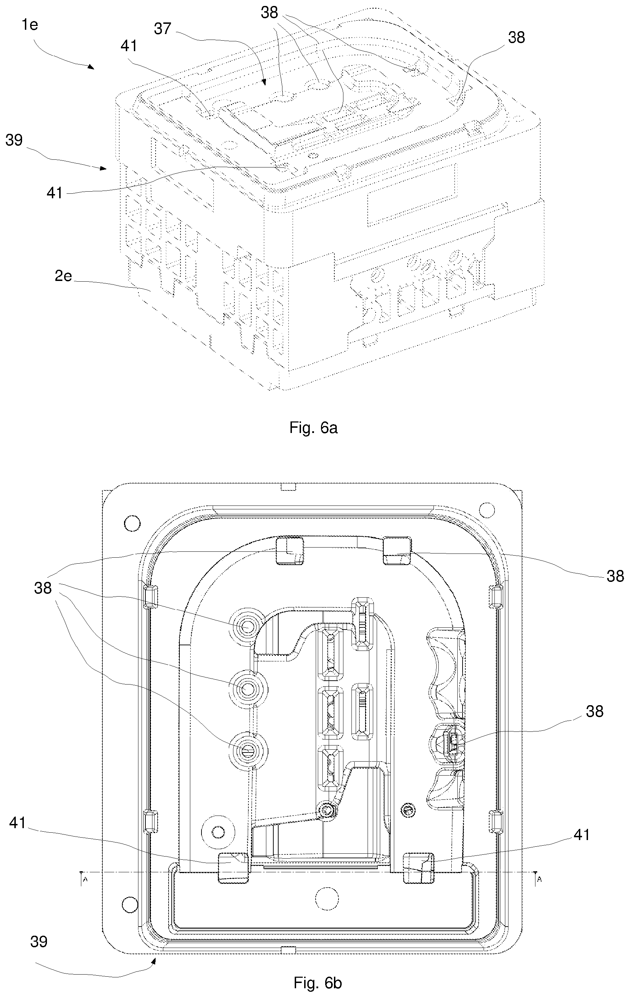

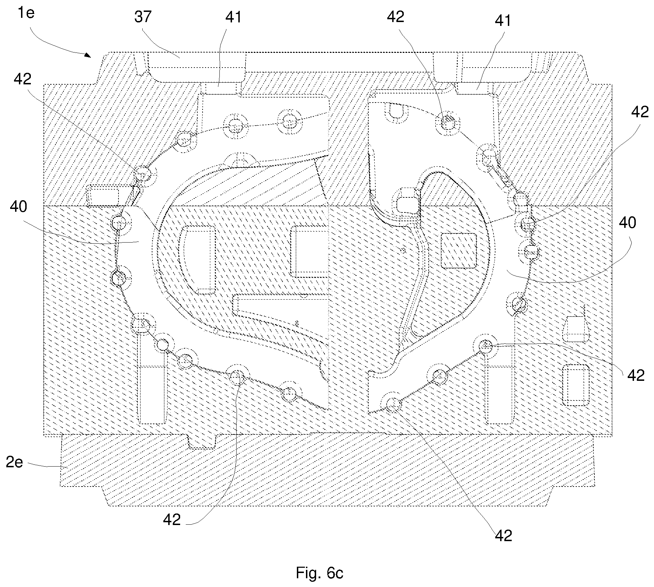

Es wird nun auf Fig. 6 Bezug genommen, wo gleiche oder gleichwirkende Teile mit derselben Bezugszahl wie in Fig. 1 bis 5 bezeichnet sind und der betreffenden Bezugszahl jeweils der Buchstabe e beigefügt ist.

Eine in Fig. 6a in einer perspektivischen Ansicht, in Fig. 6b in einer Draufsicht und in Fig. 6c in einer geschnittenen Seitenansicht im Schnitt A-A aus Fig. 6b gezeigte Sandgussform 1e umfasst einen Hohlraum 37, der einen Hauptspeiser eines mit der Sandgussform 1e herstellbaren Gussteils abbildet, und der bei Erstarrung des Gussteils oberhalb des Gussteils angeordnet ist. Durch Durchgangskanäle 38 besteht eine fluidische Verbindung des Hohlraums 37 zu einem in Fig. 6 nicht gezeigten, das Gussteil abbildenden Formhohlraum.

In einen mehrteiligen Seitenwandkern 39 der Sandgussform 1e ist ein Hohlraum 40 eingebracht, der einen zusätzlichen, seitlich an das hergestellte Gussteil angebrachten Speiser abbildet und der fluidisch durch mehrere Durchgangskanäle 41 mit dem den Hauptspeiser abbildenden Hohlraum 37 verbunden ist.

Eine fluidische Verbindung des den zusätzlichen Speiser abbildenden Hohlraums 40 mit dem das Gussteil abbildenden Formhohlraum ist durch Durchgangskanäle 42 sichergestellt. Aus Gründen der Übersichtlichkeit sind nicht alle Durchgangskanäle 42 mit einem Bezugszeichen versehen.

Denkbar ist, dass eine Gießform (1-1e) zur Herstellung eines Gehäuses für einen elektrischen Antrieb vorgesehen ist und einen Bereich mit mehreren weiteren Sandkernen aufweist, der zur Abbildung eines Aufnahmegehäuses für Leistungselektronikkomponenten und/oder Getriebekomponenten eines elektrischen Antriebs eingerichtet ist.

Außerdem kann eine Gießform (1-1e) mehrere zusätzliche Sandkerne aufweisen, die bei Verwendung des Gussteils in einem Elektromotor eines Kraftfahrzeugs zur Abbildung von Kühlkanälen vorgesehen sind, die geregelt mit einem Kühlfluid durchströmar sind.

Ferner ist denkbar, dass eine Gießform (1-1e) ein Einsatzelement aufweisen kann, das zum Verbleib in einem mit der Gießform hergestellten Gussteil eingerichtet ist. Dies kann beispielsweise ein Bauteil eines elektrischen Antriebs sein, zu dessen Herstellung das Gussteil benutzt wird.

Es versteht sich, dass sämtliche mögliche Kombinationen von Merkmalen der in Fig. 1 bis 6 gezeigten Merkmale denkbar sind. Beispielsweise kann eine in Fig. 6 gezeigte Sandgussform eine Ausnehmung 17 gemäß Fig. 3 aufweisen.

Es versteht sich außerdem, dass eine erfindungsgemäße Gießform als Dauergießform ausgebildet sein kann. Eine Dauergießform kann beispielsweise eine Kokille oder eine Druckgussform sein, in die Sandkerne eingebracht sind.

## Patentansprüche

1. Gießform (1-1e) zur Herstellung eines aus einer Leichtmetalllegierung gebildeten Gehäuses für einen elektrischen Antrieb für ein Kraftfahrzeug,
wobei die Gießform (1-1e) mindestens einen Sandkern (3; 3a; 3c) aufweist, der derart ausgebildet und in der Gießform (1-1e) angeordnet ist, dass der mindestens eine Sandkern (3; 3a; 3c) in einer Umfangsrichtung vollständig von einer Leichtmetallschmelze, mit der die Gießform zur Bildung des Gussteils befüllt wird, umgeben werden kann,
wobei der mindestens eine Sandkern (3; 3a; 3c) als Kühlkanalkern ausgebildet ist, wobei der mindestens eine Sandkern (3; 3a; 3c) zumindest bereichsweise gebogen ausgebildet ist,
**dadurch gekennzeichnet,**
**dass** ein Verhältnis einer Länge des Sandkerns (3; 3a; 3c) zu einer Sandkernquerschnittsgröße zwischen 7,5 und 38 beträgt,
**dass** die Sandkernquerschnittsgröße der Abstand von zwei Punkten des Sandkernquerschnitts ist, die am weitesten voneinander entfernt sind,
**dass** zur Verhältnisbildung die kleinste Sandkernquerschnittsgröße bei einem Sandkern mit Bereichen mit verschiedenen Sandkernquerschnittsgrößen heranzuziehen ist, und
**dass** die Sandkernquerschnittsgröße zumindest 1,6 mm beträgt.

2. Gießform nach Anspruch 1,
**dadurch gekennzeichnet,**
**dass** der mindestens eine Sandkern (3; 3a; 3c) länglich ausgebildet ist und vorzugsweise Stützelemente (14) aufweist, durch die der Sandkern (3; 3a; 3c) mit der Gießform (1-1e) oder einem anderen Sandkern verbunden ist, wobei in einer Sandkernlängsrichtung benachbarte Stützelemente (14) zwischen 60 mm und 200 mm voneinander beabstandet sind, vorzugsweise zwischen 90 mm und 150 mm, besonders bevorzugt zwischen 99 mm und 121 mm.

3. Gießform nach Anspruch 1 oder 2,
**dadurch gekennzeichnet,**
**dass** der der mindestens eine Sandkern (3; 3a; 3c) zumindest einen Verbindungsabschnitt (6, 7; 6a, 7a) aufweist, der zur Ausbildung einer formschlüssigen, kraftschlüssigen und/oder stoffschlüssigen Verbindung mit der Gießform (1-1e) oder einem anderen Sandkern eingerichtet ist, wobei im Bereich eines Übergangs (9; 9c) von dem zumindest einen Verbindungsabschnitt zu der Gießform (1-1e) oder dem anderen Sandkern vorzugsweise Ausrichtungsschrägen und/oder Entlüftungskanäle (16) vorgesehen sind.

4. Gießform nach einem der Ansprüche 1 bis 3,
**dadurch gekennzeichnet,**
**dass** der mindestens eine Sandkern (3; 3a; 3c) 3D-gedruckt ist und vorzugsweise zumindest einen Hohlraum (15) aufweist oder Bereiche umfasst, in die kein Bindemittel eingebracht ist.

5. Gießform nach einem der Ansprüche 1 bis 4,
**dadurch gekennzeichnet,**
**dass** die Gießform einen weiteren Sandkern (25) umfasst, der 3D-gedruckt ist und einen Raum (26) aufweist, der zur Aufnahme eines Kühlelements (27) eingerichtet ist.

6. Gießform nach einem der Ansprüche 1 bis 5,
**dadurch gekennzeichnet,**
**dass** der die Gießform (1-1e) einen zusätzlichen Sandkern (11; 11d) und/oder ein Dauerformeinsatzelement umfasst, wobei der zusätzliche Sandkern (11; 11d) als Elektromotorkern und das Dauerformeinsatzelement als Elektromotordauerformeinsatzelement ausgebildet ist, und zur Abbildung eines Aufnahmeraums in dem Gussteil, in den ein Stator und ein Rotor eines Elektromotors eingebracht werden können, vorgesehen ist.

7. Gießform nach Anspruch 6,
**dadurch gekennzeichnet,**
**dass** der Elektromotorkern (11; 11a) mehrteilig ausgebildet ist, wobei jeder Elektromotorkernteil (29, 30) eine Entformungsschräge (33) aufweist, die sich in einer Längsrichtung des Elektromotorkerns umlaufend über eine Mantelfläche (35) erstreckt, und/oder das Elektromotordauerformeinsatzelement eine Entformungsschräge aufweist, die sich in einer Längsrichtung des Elektromotordauerformeinsatzelements umlaufend über eine Mantelfläche erstreckt.

8. Gießform nach einem der Ansprüche 1 bis 7,
**dadurch gekennzeichnet,**
**dass** die Gießform (1-1e) ein Einsatzelement aufweist, das zur Beeinflussung von Strömungseigenschaften einer in die Gießform einströmenden Leichtmetallschmelze eingerichtet ist, wobei das Einsatzelement insbesondere als Gießfilter oder als Gießfilterkaskade ausgebildet ist.

9. Gießform nach einem der Ansprüche 1 bis 8,
**dadurch gekennzeichnet,**
**dass** die Gießform (1-1e) ein Einsatzelement aufweist, das zum Verbleib in einem mit der Gießform hergestellten Gussteil vorgesehen ist und vorzugsweise als Bauteil des elektrischen Antriebs, für den das Gussteil verwendbar ist, ausgebildet ist.

10. Gießform nach einem der Ansprüche 1 bis 9,
**dadurch gekennzeichnet,**
**dass** die Gießform (1-1e) ein aus einem anderen Material als Formsand gebildetes Einsatzelement aufweist, das zur Entfernung aus einem mit der Gießform hergestellten Gussteil vorgesehen ist.

11. Gießform nach einem der Ansprüche 1 bis 10,
**dadurch gekennzeichnet,**
**dass** die Gießform (1-1e) einen Bereich mit mehreren weiteren Sandkernen aufweist, wobei die weiteren Sandkerne bei Verwendung des Gussteils für einen elektrischen Antrieb eines Kraftfahrzeugs zur Abbildung eines Aufnahmegehäuses für Leistungselektronikkomponenten und/oder Getriebekomponenten des elektrischen Antriebs vorgesehen sind.

12. Gießform nach einem der Ansprüche 1 bis 11,
**dadurch gekennzeichnet,**
**dass** die Gießform (1-1e) einen Bereich mit mehreren zusätzlichen Sandkernen aufweist, wobei die mehreren zusätzlichen Sandkerne bei Verwendung des Gussteils in einem Elektromotor eines Kraftfahrzeugs zur Abbildung von Kühlkanälen vorgesehen sind, die geregelt mit einem Kühlfluid durchströmbar sind.

13. Gießform nach einem der Ansprüche 1 bis 12,
**dadurch gekennzeichnet,**
**dass** in wenigstens ein Seitenteil (39) der Gießform (1-1e) ein Hohlraum (40) eingebracht ist, der einen zusätzlichen Speiser abbildet, wobei der Hohlraum (40) durch Durchgangskanäle (42) mit einem das Gussteil abbildenden Formhohlraum fluidisch verbunden ist.

14. Verfahren zur Herstellung eines Gehäuses für einen elektrischen Antrieb für ein Kraftfahrzeug mit einer Gießform nach einem der Ansprüche 1 bis 13,
**dadurch gekennzeichnet,**
**dass** mindestens ein in der Gießform angeordneter Sandkern (3; 3a; 3c) von einer Leichtmetallschmelze, mit der die Gießform zur Bildung des Gussteils befüllt wird, zumindest abschnittsweise in einer Umfangsrichtung vollständig von der Leichtmetallschmelze umgeben wird.

15. Verfahren nach Anspruch 14,
**dadurch gekennzeichnet,**
**dass** durch den abschnittsweise in einer Umfangsrichtung vollständig von der Leichtmetallschmelze umgebenen Sandkern (3; 3a; 3c) ein abschnittsweise gebogener Kanal in dem Gussteil abgebildet wird.

16. Verfahren nach Anspruch 14 oder 15,
**dadurch gekennzeichnet,**
**dass** die Leichtmetallschmelze in einem Abstand von 3 bis 5 mm von einem in die Gießform (1-1e) eingebrachten Kühlelement (13; 27) mit einer Abkühlrate von mindestens 10 Kelvin pro Sekunde, vorzugsweise mindestens 13 Kelvin pro Sekunde, besonders bevorzugt mindestens 15 Kelvin pro Sekunde, abgekühlt wird.

17. Verfahren nach einem der Ansprüche 14 bis 16,
**dadurch gekennzeichnet,**
**dass** eine Bewegungsgeschwindigkeit einer Dauerform, die während einer Formfüllung bewegt wird, einstellbar ist.

## Claims

1. Casting mold (1-1e) for producing a housing for an electric drive for a motor vehicle formed from a light metal alloy,
wherein the casting mold (1-1e) has at least one sand core (3; 3a; 3c) which is designed and arranged in the casting mold (1-1e) in such a way that the at least one sand core (3; 3a; 3c) can be completely surrounded in a circumferential direction by a light metal melt with which the casting mold is filled to form the casting,
wherein the at least one sand core (3; 3a; 3c) is designed as a cooling channel core,
wherein the at least one sand core (3; 3a; 3c) is bent at least in some regions, **characterized in that**
a ratio of a length of the sand core (3; 3a; 3c) to a sand core cross-sectional size is between 7.5 and 38,
the sand core cross-section size is the distance between two points of the sand core cross-section that are furthest apart,
that the smallest sand core cross-sectional size in a sand core with regions with different sand core cross-sectional sizes is used to form the ratio, and
the sand core cross-sectional size is at least 1.6 mm.

2. Casting mold according to claim 1,
**characterized in that** the at least one sand core (3; 3a; 3c) is elongated and preferably has supporting elements (14) by means of which the sand core (3; 3a; 3c) is connected to the casting mold (1-1e) or to another sand core, wherein supporting elements (14) adjacent in a longitudinal direction of the sand core are spaced apart from one another by between 60 mm and 200 mm, preferably between 90 mm and 150 mm, particularly preferably between 99 mm and 121 mm.

3. Casting mold according to claim 1 or 2,
**characterized in that** the at least one sand core (3; 3a; 3c) has at least one connecting section (6, 7; 6a, 7a) which is designed to form a form-fitting, force-fitting and/or material-locking connection with the casting mold ( 1-1e) or another sand core, wherein preferably alignment bevels and/or venting channels (16) are provided in the region of a transition (9; 9c) from the at least one connecting section to the casting mold (1-1e) or the other sand core.

4. Casting mold according to any one of claims 1 to 3,
**characterized in that** the at least one sand core (3; 3a; 3c) is 3D-printed and preferably has at least one cavity (15) or comprises regions into which no binder is introduced.

5. Casting mold according to any one of claims 1 to 4,
characterized that the casting mold comprises a further sand core (25) which is 3D-printed and has a space (26) which is designed to receive a cooling element (27).

6. Casting mold according to any one of claims 1 to 5,
**characterized in that** the casting mold (1-1e) comprises an additional sand core (11; 11d) and/or a permanent mold insert element, wherein the additional sand core (11; 11d) is designed as an electric motor core and the permanent mold insert element is designed as an electric motor permanent mold insert element, and is provided to map a receiving space in the casting into which a stator and a rotor of an electric motor can be introduced.

7. Casting mold according to claim 6,
**characterized in that** the electric motor core (11; 11a) is of a multi-part design, wherein each electric motor core part (29, 30) has a demoulding bevel (33) which extends in a longitudinal direction of the electric motor core over a circumferential surface (35), and/or the electric motor permanent mold insert element has a demoulding bevel which extends in a longitudinal direction of the electric motor permanent mold insert element over a circumferential surface.

8. Casting mold according to any one of claims 1 to 7,
**characterized in that** the casting mold (1-1e) has an insert element which is configured to influence the flow properties of a light-metal melt flowing into the casting mold, the insert element being designed in particular as a casting filter or as a casting filter cascade.

9. Casting mold according to any one of claims 1 to 8,
**characterized in that** the casting mold (1-1e) has an insert element which is intended to remain in a casting produced by means of the casting mold and is preferably designed as a component of the electric drive for which the casting can be used.

10. Casting mold according to any one of claims 1 to 9,
**characterized in that** the casting mold (1-1e) has an insert element formed from a material other than foundry sand, which is provided for removal from a casting produced with the casting mold.

11. Casting mold according to any one of claims 1 to 10,
**characterized in that** the casting mold (1-1e) has an area with a plurality of further sand cores, the further sand cores being provided for mapping a housing for power electronics components and/or transmission components of the electric drive when the casting is used for an electric drive of a motor vehicle.

12. Casting mold according to any one of claims 1 to 11,
**characterized in that** the casting mold (1-1e) has an area with a plurality of additional sand cores, the plurality of additional sand cores being provided for mapping cooling channels through which a cooling fluid can flow in a controlled manner when the casting is used in an electric motor of a motor vehicle.

13. Casting mold according to any one of claims 1 to 12,
**characterized in that** a cavity (40) is formed in at least one side part (39) of the casting mold (1-1e), which forms an additional feeder, wherein the cavity (40) is fluidically connected by through-channels (42) to a mold cavity forming the casting.

14. Method for producing a housing for an electric drive for a motor vehicle with a casting mold according to one of claims 1 to 13,
**characterized in that** at least one sand core (3; 3a; 3c) arranged in a casting mold is completely surrounded, at least in sections, in a circumferential direction, by a light-metal melt, with which the casting mold is filled to form the casting.

15. Method according to claim 14,
**characterized in that** a channel bent in sections is formed in the casting through the sand core (3; 3a; 3c) surrounded in sections in a circumferential direction by the light-metal melt.

16. Method according to claim 14 or 15,
**characterized in that** the light metal melt is cooled at a distance of 3 to 5 mm from a cooling element (13; 27) introduced into the casting mold (1-1e) at a cooling rate of at least 10 Kelvin per second, preferably at least 13 Kelvin per second, particularly preferably at least 15 Kelvin per second.

17. Method according to any one of claims 14 to 16,
**characterized in that** a movement speed of a permanent mold that is moved during mold filling is adjustable.

## Revendications

1. Moule (1-1e) pour la fabrication d'un boîtier en alliage léger pour un moteur électrique d'un véhicule automobile,
le moule (1-1e) comportant au moins un noyau en sable (3 ; 3a ; 3c) qui est formé et disposé dans le moule (1-1e) de telle sorte que le au moins un noyau de sable (3 ; 3a ; 3c) puisse être complètement entouré dans une direction circonférentielle par un métal léger en fusion avec lequel le moule est rempli pour former la pièce moulée,
le au moins un noyau de sable (3 ; 3a ; 3c) étant conçu comme un noyau de canal de refroidissement,
le au moins un noyau de sable (3 ; 3a ; 3c) étant au moins partiellement courbé , **caractérisé en ce que**
que le rapport entre la longueur du noyau de sable (3 ; 3a ; 3c) et la taille de la section transversale du noyau de sable compris entre 7,5 et 38,
que la taille de la section transversale du noyau de sable est la distance entre deux points de la section transversale du noyau de sable qui sont les plus éloignés l'un de l'autre,
que, pour établir le rapport, il convient de se baser sur la plus petite taille de section transversale du noyau de sable dans le cas d'un noyau de sable comportant des zones de différentes tailles de section transversale, et la taille de la section transversale du noyau de sable est d'au moins 1,6 mm.

2. Moule selon la revendication 1,
**caractérisé en ce que**
que le au moins un noyau de sable (3 ; 3a ; 3c) est de forme allongé et qui comporte de préférence des éléments de support (14) par lesquels le noyau de sable (3 ; 3a ; 3c) est relié au moule (1-1e) ou à un autre noyau en sable, les éléments de support (14) adjacents dans la direction longitudinale du noyau de sable sont espacés de 60 mm à 200 mm, de préférence entre 90 mm et 150 mm, et de manière particulièrement préférée de 99 mm et 121 mm.

3. Moule selon la revendication 1 ou 2,
**caractérisé en ce que**
que le au moins un noyau de sable (3 ; 3a ; 3c) comporte au moins une partie de liaison (6, 7 ; 6a, 7a) qui est agencée pour former une liaison par complémentarité de forme, par adhérence et/ou par liaison de matière avec le moule (1-1e) ou un autre noyau de sable, des chanfreins d'alignement et/ou des canaux de purge (16) étant de préférence prévus au niveau d'une zone de transition (9 ; 9c) entre la au moins une partie de liaison et le moule (1-1e) ou l'autre noyau en sable.

4. Moule selon l'une des revendications 1 à 3,
**caractérisé en ce que**
que le au moins un noyau de sable (3 ; 3a ; 3c) est imprimé en 3D et présente de préférence au moins une cavité (15) ou comprend des zones dans lesquelles aucun liant n'est introduit.

5. Moule selon l'une des revendications 1 à 4,
**caractérisé en ce que**
que le moule comprend un autre noyau de sable (25) qui est imprimé en 3D et comporte un espace (26) qui est conçu pour recevoir un élément de refroidissement (27) .

6. Moule selon l'une des revendications 1 à 5,
**caractérisé en ce que**
que le moule (1-1 e) comprend un noyau en sable supplémentaire (11 ; 11 d) et/ou un élément d'insertion de moule permanent, le noyau de sable supplémentaire (11 ; 11 d) étant conçu comme un noyau de moteur électrique et l'élément d'insertion de moule permanent comme un élément d'insertion de moule permanent pour moteur électrique, et étant prévu pour former un espace de logement dans la pièce moulée, dans lequel un stator et un rotor d'un moteur électrique peuvent être insérés.

7. Moule selon la revendication 6,
**caractérisé en ce que**
que le noyau du moteur électrique (11 ; 11a) est constitué de plusieurs parties, chaque partie de noyau de moteur électrique (29, 30) présentant une dépouille de démoulage (33) qui s'étend dans une direction longitudinale du noyau de moteur électrique sur une surface latérale (35) , et/ou l'élément d'insertion de moule permanent de moteur électrique présente une dépouille de démoulage qui s'étend dans une direction longitudinale de l'élément d'insertion de moule permanent de moteur électrique de manière circonférentielle sur une surface latérale.

8. Moule selon l'une des revendications 1 à 7,
**caractérisé en ce que**
que le moule (1-1e) comporte un élément d'insertion qui, pour influencer les caractéristiques d'écoulement d'un métal léger en fusion s'écoulant dans le moule , l'élément d'insertion étant notamment conçu comme un filtre de coulée ou comme une cascade de filtres de coulée.

9. Moule selon l'une des revendications 1 à 8,
**caractérisé en ce que**
que le moule (1-1e) comporte un élément d'insertion qui est prévu pour rester dans une pièce moulée fabriquée avec le moule et est de préférence conçu comme un composant de l' entraînement électrique pour lequel la pièce moulée peut être utilisée.

10. Moule selon l'une des revendications 1 à 9,
**caractérisé en ce que**
que le moule (1-1e) comporte un élément d'insertion formé d'un matériau autre que du sable de moulage qui est prévu pour être retiré d'une pièce moulée fabriquée avec le moule.

11. Moule selon l'une des revendications 1 à 10,
**caractérisé en ce que**
que le moule (1-1e) comporte une zone comprenant plusieurs autres noyaux en sable, ces autres noyaux étant destinés, lors de l'utilisation de la pièce moulée pour un groupe motopropulseur électrique d'un véhicule automobile, à reproduire un boîtier de logement pour des composants électroniques de puissance et/ou des composants de transmission du groupe motopropulseur électrique.

12. Moule selon l'une des revendications 1 à 11,
**caractérisé en ce que**
que le moule (1-1e) comporte une zone avec plusieurs noyaux de sable supplémentaires , lesdits plusieurs noyaux de sable supplémentaires étant destinés, lors de l'utilisation de la pièce moulée dans un moteur électrique d'un véhicule automobile, à former des canaux de refroidissement pouvant être traversés de manière régulée par un fluide de refroidissement.

13. Moule selon l'une des revendications 1 à 12,
**caractérisé en ce que**
qu'au moins une paroi latérale (39) du moule (1-1e) comporte une cavité (40) formant un canal d'alimentation supplémentaire, la cavité (40) étant reliée de manière fluidique, par des canaux de passage (42), à une cavité de moulage formant la pièce moulée.

14. Procédé de fabrication d'un boîtier pour un entraînement électrique pour un véhicule automobile avec un moule selon l'une des revendications 1 à 13,
**caractérisé en ce que**
qu'au moins un noyau de sable (3 ; 3a ; 3c) disposé dans le moule est entouré complètement, au moins par sections dans une direction circonférentielle, par un métal léger en fusion avec lequel le moule est rempli pour former la pièce moulée.

15. Procédé selon la revendication 14,
**caractérisé en ce que**
que le noyau en sable (3 ; 3a ; 3c), qui est entièrement entouré par un métal léger en fusion sur toute sa circonférence par sections, forme un canal courbé par sections dans la pièce moulée.

16. Procédé selon la revendication 14 ou 15,
**caractérisé en ce que**
que le métal léger en fusion est refroidi à une distance de 3 à 5 mm d'un élément de refroidissement (13 ; 27) placé dans le moule (1-1e), à une vitesse de refroidissement d'au moins 10 kelvins par seconde, de préférence d'au moins 13 kelvins par seconde, et de manière particulièrement préférée d'au moins 15 kelvins par seconde.

17. Procédé selon l'une des revendications 14 à 16,
**caractérisé en ce que**
que la vitesse de déplacement d'un moule permanent déplacé pendant le remplissage du moule est réglable.
